# EUROPEAN PATENT SPECIFICATION

(11) **EP 4 297 486 B1**
(45) Date of publication and mention of the grant of the patent: **01.10.2025**
(21) Application number: 22180425.5
(22) Date of filing: 22.06.2022
(51) Int. Cl.: H04W 36/32, H04W 36/00, H04W 84/00

(54) **METHOD FOR HANDOVER OF USER EQUIPMENT ONBOARD A VEHICLE**
VERFAHREN ZUM WEITERREICHEN VON BENUTZERGERÄTEN AN BORD EINES FAHRZEUGS
PROCÉDÉ DE TRANSFERT D'UN ÉQUIPEMENT UTILISATEUR À BORD D'UN VÉHICULE

(43) Date of publication of application: 27.12.2023
(73) Proprietor: Siemens Aktiengesellschaft, 80333 München (DE)
(72) Inventor: Fiorentino, Vincenzo, 90491 Nürnberg (DE)
(74) Representative: Siemens Patent Attorneys

(56) References cited:
- EP-A2- 2 947 916
- GB-A- 2 548 376
- US-A1- 2010 177 738
- US-B2- 11 044 688

## Description

### Background:

The current disclosure relates to wireless communication techniques in industrial environments, especially in relation to communication in relation to vehicles used within industrial environments. Due to the nature of industrial applications, associated communications must provide high availability and reliability.

US patent application publication US 2010177738 A1 discloses a method of a Base Station (BS) for operating a Moving Network (MN) which includes determining an operation mode of the MN in a cell by collecting information of the cell, and transmitting the determined operation mode to the MN. The operation mode includes at least one of an Operation ON mode in which the MN maintains links to Mobile Stations (MSs) in a service coverage area of the MN, and an Operation OFF mode in which the MN turns off the links to the MSs in the service coverage area of the MN.

European patent application publication EP 2947916 A2 discloses a control of handover management at a first base station in a cellular network. A separate, provisioning base station of the cellular network may provide the first base station with a radio backhaul interface to a core network part of the cellular network. Then, handover status information may be communicated to the first base station, the information being based on a handover status for the provisioning base station. Additionally or alternatively, the first base station is configured for operation whilst mobile and a mobility parameter is determined for it, relating to a change in location for the first base station. Handover status information is communicated to the first base station based on the determined mobility parameter.

### Description:

The current invention relates to wireless communication in the context of industrial automation. As mentioned above, due to the critical nature of industrial applications, high availability and reliability are required. This is particularly the case in relation to vehicles and other such mobile equipment used in the context of industrial automation. However, this is particularly challenging in the context of trains and other such long distance transportation.

For example, onboard coverage for industrial and passenger equipment aboard in trains is difficult as coverage of mobile operator networks is not always optimized for the train tracks. Conventionally, train network infrastructure include cellular routers which connect to the mobile operator network, which are connected local WLAN equipment which provide indoor coverage to the industrial and passenger equipment by means of WLAN. Although the cellular routers can have multiple SIMs to connect to several operators and choose the best among them, this solution will not necessarily deliver a good and reliable service since the coverage of the mobile operator network is often poor, since they often share the same antenna site resulting in no real difference amongst the different mobile operators. Most rail tracks are in rural areas where the coverage is achieved with 2G networks which do not have sufficient data rate. Moreover, the propagation conditions can be hostile due to the landscape, mountains, train speed and indoor propagation inside the train. Because of this, industrial and passenger equipment often suffer from loss of coverage and poor service quality.

In an approach, this issue is addressed by providing a dedicated 5G network for transmission of packets from the industrial and passenger equipment onboard the train. The dedicated 5G network includes a radio unit located on the vehicle, for providing network connectivity to one or more user equipment onboard a vehicle. The radio unit belongs to a distributed base station and is connected to a 5G network core. In an example, the 5G network core is the home network or is connected to the home network associated with at least one user equipment from the one or more user equipment. By using dedicated network, the equipment onboard the vehicle do not suffer from poor coverage as the wayside network and the dedicated network offer optimal coverage throughout the route of the vehicle, since wayside network provides a reliable connectivity to transport the protocols between the RU onboard and the core.

However, when a vehicle with such a dedicated 5G network infrastructure enters a station, the dedicated 5G network infrastructure could cause interference to the public network. Such interference could significantly affect the performance of the devices on the vehicle and in the station. Accordingly, there is a need for a method and a device which addresses the issue of interference.

Accordingly, the current disclosure describes a method of performing handover of one or more user equipment on a vehicle, by a first base station comprising at least one radio unit onboard the vehicle. The method comprises determining location information of the at least one radio unit onboard the vehicle, determining a distance to a first vehicle station at which the vehicle has a stop based on the location information of the at least one radio unit onboard vehicle, performing a forced handover of one or more user equipment connected to the at least one radio unit from the first base station to a second base station based on the determined distance, wherein the second base station is within a proximity of the first vehicle station; and subsequent to the forced handover deactivating the at least one radio unit onboard the vehicle for a first time period.

Accordingly, the current disclosure describes a method of performing handover by which potential interference is avoided. By ensuring that the radio unit of the first base station is deactivated, interference with the second base station within the proximity of the first vehicle station is avoided. Additionally, by forcings handover of the user equipment, the current disclosures ensures that the deactivation of the radio unit does not affect the user experience onboard the vehicle.

In an embodiment, the method further comprises activating the at least one radio unit onboard the vehicle after the first time period. Accordingly, this allows for establishment of connections between the user equipment and the radio units, when the vehicle is outside the vehicle station and therefore, no interference with the second base station occurs.

In an embodiment, the method further comprises determining a frequency range associated with the second base station prior to performing the forced handover. Accordingly, the current disclosure allows for checking the degree of interference prior to deactivating the radio units and based on the same, the distributed unit may determine of the radio units have to deactivated or not.

In another aspect, the current disclosure describes a first base station for performing a handover of one or more user equipment on a vehicle. The first base station comprises a plurality of a radio units on onboard a vehicle, each radio unit connected to one or more user equipment onboard the vehicle; and a distributed unit connected to the plurality of radio units. The distributed unit is configured to determine location information of a first radio unit onboard the vehicle, determine a distance to a first vehicle station at which the vehicle has a stop based on the location information of the first radio unit onboard the vehicle, perform a forced handover of one or more user equipment connected to the radio unit from the first base station to a second base station based on the determined distance, wherein the second base station is within a proximity of the first vehicle station, and subsequent to the forced handover deactivate the plurality of radio units onboard the vehicle for a first time period.

In an embodiment, the plurality of radio units are connected to each other over a first wireless communication network and a second optical communication network. Each radio unit comprises a first network interface (also referred to as radio interfaces) connected to the first wireless communication network and a second optical interface connected to the second wired communication network. Accordingly, the second optical interface may be used when the vehicle is in the vehicle station, while the radio interfaces of the radio units are deactivated.

In an embodiment, the distributed unit is further configured to receive one or more packets for transmission to a first user equipment, and append a special header to one or more packets, wherein the special header is indicative of a radio unit associated with the first user equipment. The special header is used for routing the packets amongst the radio units.

In an embodiment, deactivating the plurality of radio units including deactivating the first interface associated with the first wireless communication network of each radio unit. Accordingly, there is no interference between the radio units and the second base station since the communication amongst the radio units occurs via the optical network which does not interfere with the second base station.

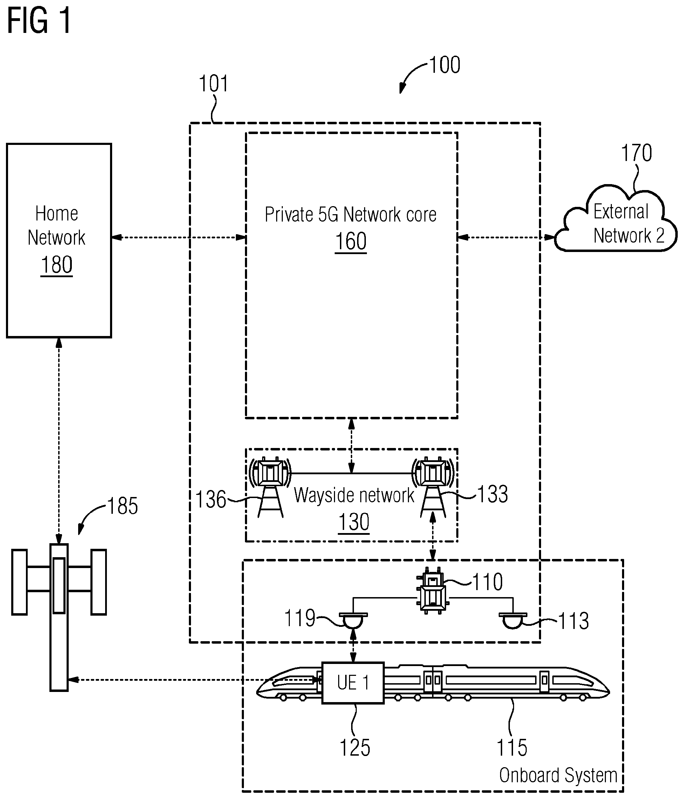

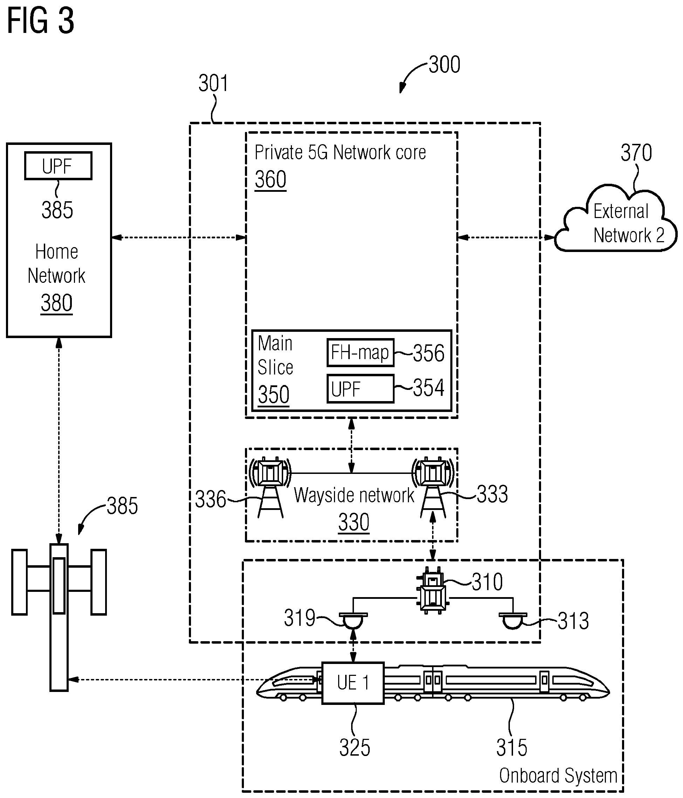

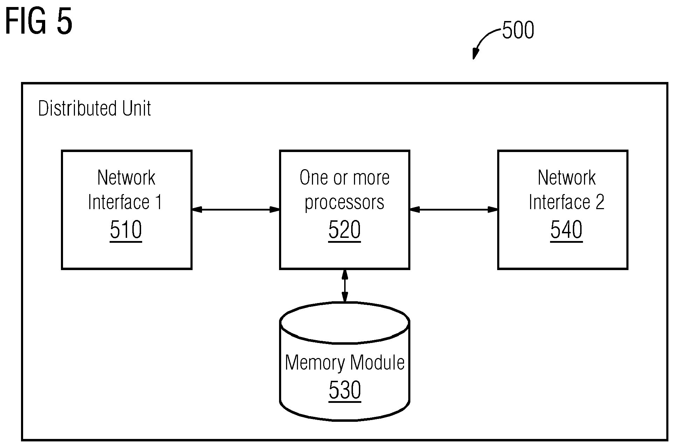

In another aspect, the current disclosure describes a non transitory storage medium for performing handover of one or more user equipment on a vehicle. The non transitory storage medium comprises one or more instructions, which when executed on one or more processors, cause the one or more processors to determine location information of a first radio unit onboard the vehicle, wherein the one or more user equipment are connected to the first radio unit; determine a distance to a first vehicle station at which the vehicle has a stop based on the location information of the first radio unit onboard the vehicle; perform a forced handover of one or more user equipment connected to the radio unit from the first base station to a second base station based on the determined distance, wherein the second base station is within a proximity of the first vehicle station; and subsequent to the forced handover deactivate the plurality of radio units onboard the vehicle for a first time period. The advantages of the method are applicable to the device and the non transitory storage medium aspects. These features are explained in reference to figures 1-5.
Figure 1 illustrates a dedicated wireless network for communication onboard a vehicle in an industrial environment;
Figure 2 illustrates a method of performing handover of one or more user equipment on a vehicle;
Figure 3 illustrates a dedicated wireless network for communication onboard a vehicle in an industrial environment;
Figure 4 illustrates a dedicated wireless network with a plurality of radio units with two side links, for communication onboard a vehicle in an industrial environment; and
Figure 5 illustrates a device for performing handover of one or more user equipment on a vehicle.

Figure 1 illustrates a dedicated wireless network 101 for communication onboard a vehicle 115 in an industrial environment. Industrial environment herein refers to any environment where one or more industrial processes such as manufacturing, refining, smelting, assembly of equipment may take place and includes process plants, oil refineries, automobile factories, electrical power plants, transportation infrastructure such as railways, ships, etc. The vehicle may comprise a plurality of control devices connected to a plurality of field devices for monitoring and regulating one or more processes on the vehicle 115. Vehicle herein refers to any machine capable of transporting material or personnel from one location to another. Example of vehicles include automated guidance vehicles, mining carts, trains, automobiles, etc. The vehicle is capable of running along a predetermined route comprising a plurality vehicle stations. Each vehicle station includes a stationary base station (for example, a stationary base station 185 as shown in figure 1) connected to a cellular network.

The dedicated wireless network 101 includes one or more network devices installed onboard the vehicle 115, for example radio unit 110 and one or more access points or antenna 119 and 113 as shown in figure 1. The one or more network devices onboard the vehicle 115 are connected to the network core 160 via a wayside network 130. The radio unit 110 belong to a first base station (not shown in figure). The first base station is a distributed base station and includes a distributed unit and a central unit in addition to the radio unit 110. The first base station may include additional radio units (not shown in figure) may also be present onboard the vehicle 115 along with the radio unit 110.

The one or more network device installed onboard the vehicle 115 are connected to a network core 160 via a wayside network 130. The wayside network 130 includes a plurality of network infrastructure devices 133 and 136, and includes, for example, one or more base stations including radio units, distributed units, central units, etc. As mentioned previously, the wayside network 130 is connected to the network core 160. The central units process non-real time protocols and services. The distributed units process physical level protocols and latency-critical real time services. The radio units carry out link layer and physical layer signal processing when transmitting and receiving radio signals. A plurality of well known protocols (such as eCPRI) may be used for communication amongst these components. The dedicated wireless network 110 includes the network core 160 for managing and operating the dedicated wireless network 101. As mentioned previously, the network core 160 is connected to the home network 180 associated with the user equipment 125. Accordingly, the network core 160 is configured to transmit the packets to the corresponding home network 180. Accordingly, network connectivity is provided between the user equipment and the home network.

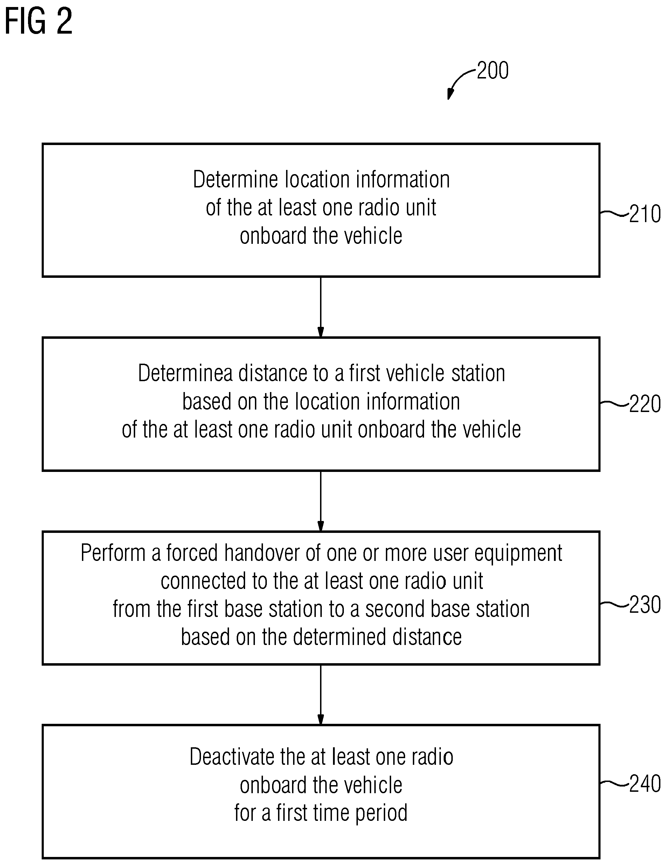

As mentioned previously, the vehicle is configured to move along a path comprising a plurality of vehicle stations. As mentioned previously, each vehicle station includes a stationary base station connected to a home network of at least one user equipment. Accordingly, when the vehicle enters the station, the user equipment may connect to the home network directly via the stationary base stations in the station. Accordingly, the base stations of the dedication wireless network are configured to handover the user equipment to the stationary base station as the vehicle arrives at the station and switch of the radio units in order to reduce wireless interference. This is further explained in reference to figure 2.

Figure 2 illustrates a method 200 of performing handover of one or more user equipment 125 on a vehicle 115 by a first base station. As mentioned previously, the first base station includes the radio unit 110 onboard the vehicle 115. In an example, the method 200 is performed by a distributed unit of the first base station in coordination with the network core 160. At step 210, the distributed unit determines location information of the at least one radio unit 110 onboard the vehicle 115. In an embodiment, the distributed unit coordinates with a location manager function of the network core 160, associated with the radio unit to determine the location information of the radio unit. Location information herein refers to information indicative of the location of the radio unit. Since the vehicle is in motion, the location information is dynamic and therefore the distributed unit coordinated with location manager regularly to get the information about the location of the radio unit. The location manager determines the location information using one or more localization standards and techniques such as GPS, GLONASS, etc.

Then at step 220, the distributed unit determines a distance to a first vehicle station based on the location information of the at least one radio unit 110 onboard the vehicle 115. Based on the location information of the at least one radio unit 110, the distributed unit determines the nearest vehicle station (i.e. the first vehicle station) at which the vehicle has a stop. In an example, the distributed unit includes information related to the route of the vehicle including information about the vehicle stations in the route along with the location information of the vehicle stations. In another example, the distributed unit is configured to fetch the information related to the route of the vehicle. Based on the location information of the vehicle stations, the distributed unit determines the nearest vehicle station (i.e., the first vehicle station) and the distance to the nearest vehicle station. The nearest vehicle station includes a base station (i.e., second base station). The second base station is connected to a home network associated with a user equipment from the one or more user equipment onboard the vehicle. The second base station 185 is within a proximity of the first vehicle station.

Then, at step 230, the distributed unit performs a forced handover of one or more user equipment 125 connected to the at least one radio unit 110 from the first base station to a second base station 185 based on the determined distance. Based on the determined distance to the nearest vehicle station (i.e. the first vehicle station) the distributed unit determines a time instance at which the handover (from the first base station to the second base station) would be possible, based on the information location of the first vehicle station. The distributed unit then at the determined time instance, conducts a forced handover of the one or more user equipment connected to the first base station, to the second base station. The forced handover may be performed in accordance to one or more techniques already known in the state of the art. In an example, based the determined distance, the distributed unit may receive an instruction for performing the handover, from the access and mobility management function (AMF) in the network core 160.

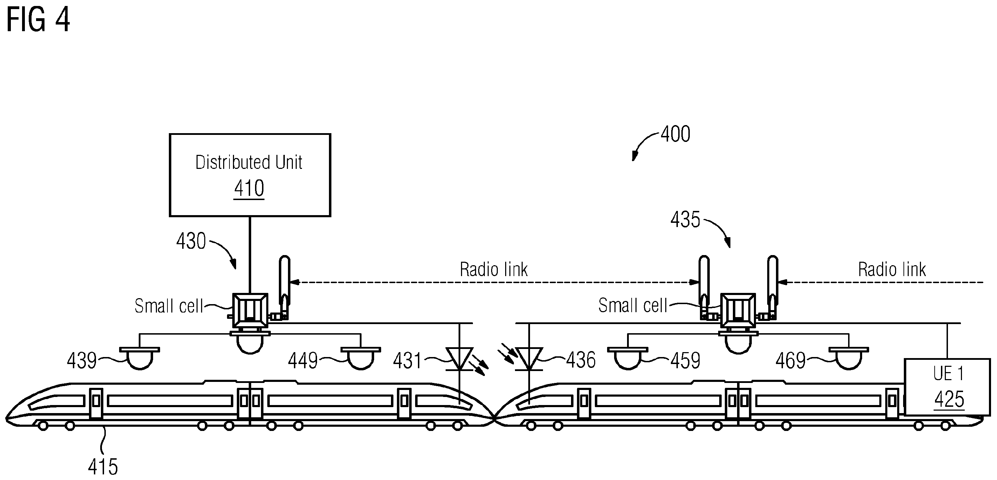

Then, at step 240, the distributed unit deactivates the at least one radio unit 110 onboard the vehicle 115 for a first time period. Subsequent to the forced handover of the user equipment, the distributed unit deactivates the radio units to avoid interference with the second base station. In an embodiment, deactivation of the radio unit refers to deactivation of the radio interfaces (i.e., the radio modules and antennas). Any other interfaces which are not wireless in nature, such as wired and optical interfaces are not deactivated, and communication may still take place over these interfaces. This is further explained in reference to figure 4.

While the above method 200 is explained in relation to the vehicle entering the vehicle station, the method 200 may be modified by a person skilled in the art to address other situations. For example, the method 200 may also be performed based on the location of the radio unit onboard the vehicle and the status of the radio unit in relation to surrounding interference.

For example, when the vehicle is in the station, a user equipment may enter the vehicle. In this situation the radio unit onboard the vehicle does not interfere with the public network covering the station. The user equipment will report to the network the measurement of the signal received from the onboard RU. The AMF of the home network may send handover instructions to the UE to move to the onboard cell.

In another example, the vehicle is in the vehicle station and the on board radio unit is switched off in accordance with the method 200. Once the vehicle moves outside, the position of the onboard radio unit is sent to the Location/Interference manager that commands the distributed unit to switch on the radio units onboard the train. Upon switching on the radio units, the distributed unit would perform a handover of the user equipment from the base station in the vehicle station to the onboard radio unit.

The first time period is determined based the information associated with the first vehicle station. In an embodiment, information associated with the first vehicle station includes a period for which the vehicle stays at the first vehicle station (also referred to as dwell time). Based on the dwell time, the distributed unit determines the first time period for which the radio units are deactivated. In an embodiment, the distributed unit activates the at least one radio unit 110 onboard the vehicle 115 after the first time period. For example, the vehicle leaves the station after the dwell time, the distributed unit activates the radio units.

In an embodiment, the distributed unit determines a frequency range associated with the second base station prior to performing the forced handover. The frequency range is stored in the information associated with the first vehicle station. Based on the frequency range, the distributed unit determines the degree of interference and determines if the radio units have to be deactivated or not. For example, if the frequency range associated with the second base station is not impacted by the frequencies used by the radio units, the distributed unit does not deactivate the radio units.

Accordingly, as described above the disclosure describes a method by which interference between the second base station and the radio units onboard the vehicle is eliminated. By forcing the handover of the user devices or user equipment to the second base station, the current disclosure ensures that network connectivity is not disrupted due to the deactivation of radio units for the purpose inference handing.

However, such deactivation of radio units may affect implementation of changes in network policy across the radio units. Accordingly, in order to address this, the radio units are connected to each other via an optical fiber connection in addition to the wireless network. To handle interference, the wireless interfaces of the radio units are deactivated, while the optical interfaces remain active thereby allowing for communication between the radio units and the distributed unit over the wired network. This is further explained in reference to figure 4.

Figure 4 illustrates another dedicated wireless network for communication onboard a vehicle 415 in an industrial environment. Accordingly, the dedicated wireless network includes the network devices onboard the vehicle and the wayside network (not shown in the figure). As shown in the figure, the dedicated wireless network includes a plurality of radio units (430, 435) for providing network connectivity to the user equipment (425) onboard the vehicle. The radio units may be connected to the distributed unit 410. In an example, the distributed unit may be onboard the vehicle 415. Each radio unit (430, 435) is connected to the other radio units over an optical fiber network and a wireless network. The wireless network is a subnetwork of the dedicated wireless network. Each radio unit may be connected to one or more antennas (439, 449,459,469).

Additionally, each radio unit (430, 435) is equipped with an optical interface (431, 436) to communicate to another radio unit and with a radio interface or a wireless interface also to communicate to other radio units. To guarantee the robustness of the connection, optical and radio links are used amongst the radio units. In an embodiment, the optical signal is conducted via cable to the coach end, on both sides, and via an optical connection the data are passed from one coach to the other. In an embodiment, the distributed unit 410 is also connected to the optical fiber network.

Accordingly, the current disclosure provides for optical connection amongst the radio units which may be used particularly when the wireless interfaces are deactivated. Additionally, the optical connections may allows for path redundancy. For example, the radio units can communicate packets amongst each other over both the wireless and the optical link to ensure packets arrive at the destination radio unit. In an embodiment, to ensure effective use of such multi-network linkage, the format of fronthaul frame is modified. The fronthaul frame includes an additional header indicative of the destination radio unit. When a radio unit receives such a frame from either another radio unit or from the distributed unit, the frame is analyzed by the radio unit. If the destination is the current radio, the header section is removed from the frame and the radio unit then forwards the packet to the user equipment associated with the packet. If the destination radio unit as mentioned in the header in the frame is another RU, the radio unit forwards the frame including the header, to the other radio units via the wireless and optimal links. Via these two interfaces, the frame is sent to the neighbouring radio units.

In an embodiment, the radio unit 310 belongs to the home network 380, and the wayside network 330 and network core 360 act as a tunnel/transport layer between the radio unit 310 and the home network 380, which are transparent to the user equipment connected to the home network 380. Accordingly, the radio unit 310 acts as an extension of the home network 380.

Accordingly, the network core 360 includes a user plane function 354 which is responsible for transporting packets over the wayside network and the network core 360. This is distinct from the user plane function 385 of the home network 380. In an example, the radio unit 310 is configured to wrap and unwrap the packets to/from the user equipment in relation one or more protocols associated with the wayside network and network core. In another example, the user equipment 325 is configured to wrap and unwrap the packets to/from the user equipment in relation one or more protocols associated with the wayside network and network core. For example, the radio unit or the user equipment is capable of mapping wrapping and unwrapping protocols into/out of the protocols (including fronthaul protocols) associated with the home network 180 and the network core 160. For example, a fronthaul map function (shown as FH-map 356) is implemented in the network core 360. The fronthaul map function is for wrapping the packets to the user equipment and for unwrapping the packets to the home network. For example, different fronthaul protocols can be used between the network core 360 and the home network 380. Since the packets are transported to the home network via the network core and the wayside network, the fronthaul (FH) protocols of the home network are wrapped in the protocols of the network core and the wayside network. The fronthaul map function manages the translation of the flow of information between the home network and network core (including wayside network). Such wrapping and unwrapping may also be performed accordingly for other protocols as needed. For example, when small cell specification is used at the RU (i.e. RU acting as a small cell), appropriate wrapping and unwrapping of protocols may be performed for the transport of the packets from the small cell RU to the home network via the wayside network and the network core.

In an example, the network core may include two or more network slices: a first network slice (also referred to as onboard slice) and a second network slice (also referred to as the main slice). The first network slice handles communication between the user equipment onboard the vehicle and external networks such as the home network associated with at least one user equipment. The first network slice includes a plurality of network functions for handling and managing the communication associated with the user equipment. The second network slice manages and handles the wayside network and the communication occurring over the wayside network. The second network slice includes a plurality of network functions. The wayside network and the second network slice are responsible for transporting packets associated with the first network slice. The wayside network and second network slice act as a dedicated tunnel between the user equipment on the vehicle and the first network slice which allows for transportation of packets associated with the first network slice over the user plane of the second network slice.

The present disclosure can take a form of a computer program product comprising program modules accessible from computer-usable or computer-readable medium storing program code for use by or in connection with one or more computers, processing units, or instruction execution system. For example, the distributed unit may be realized across one or more devices.

For example, accordingly, the current disclosure as describes a device 500. The device 500 implements the method 200. The device 500 includes one or more network interfaces (510, 540), one or more processors 520 and a non-transitory storage medium 530. The non-transitory storage medium 530 contains a plurality of instructions for implementing the method 200.

The plurality of instructions, which when executed on one or more processors 520, cause the one or more processors 520 determine location information of a first radio unit 110 onboard the vehicle 115, determine a distance to a first vehicle station based on the location information of the first radio unit 110 onboard the vehicle 115, perform a forced handover of one or more user equipment 125 connected to the radio unit 110 from the first base station to a second base station 185 based on the determined distance, wherein the second base station 185 is within a proximity of the first vehicle station; and deactivate the plurality of radio units onboard the vehicle 115 for a first time period.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the current disclosure is described with references to few industrial devices, a plurality of industrial devices may be utilized in the context of the current disclosure. While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All advantageous embodiments claimed in method claims may also be applied to device/non transitory storage medium claims.

## Claims

1. A method (200) of performing handover of one or more user equipment (125) on a vehicle (115), by a first base station comprising at least one radio unit (110) onboard the vehicle (115), the method (200) comprising:
a. determining (210) location information of the at least one radio unit (110) onboard the vehicle (115) ;
b. determining (220) a distance to a first vehicle station at which the vehicle has a stop based on the location information of the at least one radio unit (110) onboard the vehicle (115);
c. performing (230) a forced handover of one or more user equipment (125) connected to the at least one radio unit (110) from the first base station to a second base station (185) based on the determined distance, wherein the second base station (185) is within a proximity of the first vehicle station; and
d. subsequent to the forced handover deactivating (240) the at least one radio unit (110) onboard the vehicle (115) for a first time period.

2. The method (200) as claimed in claim 1, wherein the method (200) further comprises activating the at least one radio unit (110) onboard the vehicle (115) after the first time period.

3. The method (200) as claimed in claim 1, wherein the method (200) further comprises determining a frequency range associated with the second base station prior to performing the forced handover.

4. The method as claimed in claim 1, wherein the at least one radio unit (110) belongs to a home network (180) associated with the second base station (185) and wherein the at least one radio unit (110) is connected to the home network (180) via a wayside network (130).

5. A first base station for performing a handover of one or more user equipment (125) on a vehicle (115), the first base station comprising:
a. a plurality of a radio units on onboard a vehicle, each radio unit connected to one or more user equipment onboard the vehicle; and
b. a distributed unit connected to the plurality of radio units, wherein the distributed unit is configured to:
i. determine location information of a first radio unit (110) onboard the vehicle (115);
ii. determine a distance to a first vehicle station at which the vehicle has a stop based on the location information of the first radio unit (110) onboard the vehicle (115);
iii. perform a forced handover of one or more user equipment (125 connected to the radio unit (110) from the first base station to a second base station (185) based on the determined distance, wherein the second base station (185) is within a proximity of the first vehicle station; and
iv. subsequent to the forced handover deactivate the plurality of radio units onboard the vehicle (115) for a first time period.

6. The first base station as claimed in claim 5, wherein the plurality of radio units are connected to each other over a first wireless communication network and a second wired communication network, and wherein each radio unit comprises a first network interface connected to the first wireless communication network and a second optical interface connected to the second optical communication network.

7. The first base station as claimed in claim 5, wherein the distributed unit is further configured to receive one or more packets for transmission to a first user equipment, and append a special header to one or more packets, wherein the special header is indicative of a radio unit associated with the first user equipment.

8. The first base station as claimed in claim 5, wherein deactivating the plurality of radio units including deactivating the first interface associated with the first wireless communication network of each radio unit.

9. A non transitory storage medium for performing handover of one or more user equipment (125) on a vehicle (115), the non transitory storage medium comprising one or more instructions, which when executed on one or more processors, cause the one or more processors to:
a. determine location information of a first radio unit (110) onboard the vehicle (115), wherein the one or more user equipment are connected to the first radio unit (110);
b. determine a distance to a first vehicle station at which the vehicle has a stop based on the location information of the first radio unit (110) onboard the vehicle (115);
c. perform a forced handover of one or more user equipment (125 connected to the radio unit (110) from the first base station to a second base station (185) based on the determined distance, wherein the second base station (185) is within a proximity of the first vehicle station; and
d. subsequent to the forced handover deactivate the plurality of radio units onboard the vehicle (115) for a first time period.

## Patentansprüche

1. Verfahren (200) zum Durchführen einer Weiterreichung eines oder mehrerer Benutzergeräte (125) an einem Fahrzeug (115) durch eine erste Basisstation, die mindestens eine Funkeinheit (110) an Bord des Fahrzeugs (115) umfasst, wobei das Verfahren (200) Folgendes umfasst:
a. Bestimmen (210) von Standortinformationen der mindestens einen Funkeinheit (110) an Bord des Fahrzeugs (115);
b. Bestimmen (220) einer Entfernung zu einer ersten Fahrzeugstation, an der das Fahrzeug Halt macht, basierend auf den Standortinformationen der mindestens einen Funkeinheit (110) an Bord des Fahrzeugs (115);
c. Durchführen (230) einer erzwungenen Weiterreichung eines oder mehrerer Benutzergeräte (125), die mit der mindestens einen Funkeinheit (110) verbunden sind, von der ersten Basisstation an eine zweite Basisstation (185) basierend auf der bestimmten Entfernung, wobei sich die zweite Basisstation (185) in einer Nähe der ersten Fahrzeugstation befindet; und
d. nach der erzwungenen Weiterreichung Deaktivieren (240) der mindestens einen Funkeinheit (110) an Bord des Fahrzeugs (115) für einen ersten Zeitraum.

2. Verfahren (200) nach Anspruch 1, wobei das Verfahren (200) ferner Aktivieren der mindestens einen Funkeinheit (110) an Bord des Fahrzeugs (115) nach dem ersten Zeitraum umfasst.

3. Verfahren (200) nach Anspruch 1, wobei das Verfahren (200) ferner Bestimmen eines Frequenzbereichs umfasst, der mit der zweiten Basisstation assoziiert ist, bevor die erzwungene Weiterreichung durchgeführt wird.

4. Verfahren nach Anspruch 1, wobei die mindestens eine Funkeinheit (110) zu einem Heimatnetzwerk (180) gehört, das mit der zweiten Basisstation (185) assoziiert ist, und wobei die mindestens eine Funkeinheit (110) mit dem Heimatnetzwerk (180) über ein straßenseitiges Netzwerk (130) verbunden ist.

5. Erste Basisstation zum Durchführen einer Weiterreichung eines oder mehrerer Benutzergeräte (125) an einem Fahrzeug (115), wobei die erste Basisstation Folgendes umfasst:
a. eine Mehrzahl von Funkeinheiten an Bord eines Fahrzeugs, wobei jede Funkeinheit mit einem oder mehreren Benutzergeräten an Bord des Fahrzeugs verbunden ist; und
b. eine verteilte Einheit, die mit der Mehrzahl von Funkeinheiten verbunden ist, wobei die verteilte Einheit zu Folgendem ausgelegt ist:
i. Bestimmen von Standortinformationen einer ersten Funkeinheit (110) an Bord des Fahrzeugs (115);
ii. Bestimmen einer Entfernung zu einer ersten Fahrzeugstation, an der das Fahrzeug Halt macht, basierend auf den Standortinformationen der ersten Funkeinheit (110) an Bord des Fahrzeugs (115);
iii. Durchführen einer erzwungenen Weiterreichung eines oder mehrerer Benutzergeräte (125), die mit der Funkeinheit (110) verbunden sind, von der ersten Basisstation an eine zweite Basisstation (185) basierend auf der bestimmten Entfernung, wobei sich die zweite Basisstation (185) in einer Nähe der ersten Fahrzeugstation befindet; und
iv. nach der erzwungenen Weiterreichung Deaktivieren der Mehrzahl von Funkeinheiten an Bord des Fahrzeugs (115) für einen ersten Zeitraum.

6. Erste Basisstation nach Anspruch 5, wobei die Mehrzahl von Funkeinheiten über ein erstes, drahtloses Kommunikationsnetzwerk und ein zweites, drahtgebundenes Kommunikationsnetzwerk miteinander verbunden ist und wobei jede Funkeinheit eine erste Netzwerkschnittstelle, die mit dem ersten, drahtlosen Kommunikationsnetzwerk verbunden ist, und eine zweite, optische Schnittstelle umfasst, die mit dem zweiten, optischen Kommunikationsnetzwerk verbunden ist.

7. Erste Basisstation nach Anspruch 5, wobei die verteilte Einheit ferner dazu ausgelegt ist, ein oder mehrere Pakete zur Übertragung an eine erste Benutzereinrichtung zu empfangen und einen speziellen Header an ein oder mehrere Pakete anzuhängen, wobei der spezielle Header eine Funkeinheit angibt, die mit der ersten Benutzereinrichtung assoziiert ist.

8. Erste Basisstation nach Anspruch 5, wobei das Deaktivieren der Mehrzahl von Funkeinheiten Deaktivieren der ersten Schnittstelle umfasst, die mit dem ersten, drahtlosen Kommunikationsnetzwerk jeder Funkeinheit assoziiert ist.

9. Nichtflüchtiges Speichermedium zum Durchführen einer Weiterreichung eines oder mehrerer Benutzergeräte (125) an einem Fahrzeug (115), wobei das nichtflüchtige Speicherungsmedium eine oder mehrere Anweisungen umfasst, die, wenn sie auf einem oder mehreren Prozessoren ausgeführt werden, den einen oder die mehreren Prozessoren zu Folgendem veranlassen:
a. Bestimmen von Standortinformationen einer ersten Funkeinheit (110) an Bord des Fahrzeugs (115), wobei das eine oder die mehrere Benutzergeräte mit der ersten Funkeinheit (110) verbunden sind;
b. Bestimmen einer Entfernung zu einer ersten Fahrzeugstation, an der das Fahrzeug Halt macht, basierend auf den Standortinformationen der ersten Funkeinheit (110) an Bord des Fahrzeugs (115);
c. Durchführen einer erzwungenen Weiterreichung eines oder mehrerer Benutzergeräte (125), die mit der Funkeinheit (110) verbunden sind, von der ersten Basisstation an eine zweite Basisstation (185) basierend auf der bestimmten Entfernung, wobei sich die zweite Basisstation (185) in einer Nähe der ersten Fahrzeugstation befindet; und
d. nach der erzwungenen Weiterreichung Deaktivieren der Mehrzahl von Funkeinheiten an Bord des Fahrzeugs (115) für einen ersten Zeitraum.

## Revendications

1. Un procédé (200) de transfert d'un ou de plusieurs équipements (125) utilisateurs à un véhicule (115) par un premier poste de base comprenant au moins une unité (110) radio à bord du véhicule (115), le procédé (200) comprenant :
a. déterminer (210) une information d'emplacement de la au moins une unité (110) radio à bord du véhicule (115) ;
b. déterminer (220) une distance à un premier poste de véhicule où le véhicule a un arrêt sur la base de l'information d'emplacement de la au moins une unité (110) radio à bord du véhicule (115) ;
c. effectuer (230) un transfert forcé d'un ou de plusieurs équipements (125) d'utilisateurs raccordés à la au moins une unité (110) radio du premier poste de base à un deuxième poste (185) de base sur la base de la distance déterminée, dans lequel le deuxième poste (185) de base est à proximité du premier poste de véhicule ; et
d. à la suite du transfert forcé, désactiver (240) la au moins une unité (110) radio à bord du véhicule (115) pendant un premier laps de temps.

2. Le procédé (200) tel que revendiqué à la revendication 1, dans lequel le procédé (200) comprend en outre activer la au moins une unité (110) radio à bord du véhicule (115) après le premier laps de temps.

3. Le procédé (200) tel que revendiqué à la revendication 1, dans lequel le procédé (200) comprend en outre déterminer un domaine de fréquence associé au deuxième poste de base avant d'effectuer le transfert forcé.

4. Le procédé tel que revendiqué à la revendication 1, dans lequel la au moins une unité (110) radio appartient à un réseau (180) domestique associé au deuxième poste (185) de base, et dans lequel la au moins une unité (110) radio peut être raccordée au réseau (180) domestique par un réseau (130) intermédiaire.

5. Un première poste de base pour effectuer un transfert d'un ou de plusieurs équipements (125) d'utilisateurs à un véhicule (115), le premier poste de base comprenant :
a. une pluralité d'unités radio à bord d'un véhicule, chaque unité radio étant raccordée à un ou plusieurs équipements d'utilisateurs à bord du véhicule ; et
b. une unité distribuée raccordée à la pluralité d'unités radio, dans lequel l'unité distribuée est configurée pour :
i. déterminer une information d'emplacement d'une première unité (110) radio à bord du véhicule (115) ;
ii. déterminer une distance à un premier poste de véhicule où le véhicule a un arrêt sur la base de l'information d'emplacement d'une première unité (110) radio à bord du véhicule (115) ;
iii. effectuer un transfert forcé d'un ou de plusieurs équipements (125) d'utilisateurs raccordés à l'unité (110) radio du premier poste de base à un deuxième poste (185) de base sur la base de la distance déterminée, dans lequel le deuxième poste (185) de base est à proximité du premier poste de véhicule ; et
iv. à la suite du transfert forcé, désactiver la pluralité d'unités radio à bord du véhicule (115) pendant un premier laps de temps.

6. Le premier poste de base tel que revendiqué à la revendication 5, dans lequel la pluralité d'unités radio sont raccordées les unes aux autres par un premier réseau de communication sans fil et par un deuxième réseau de communication filaire, et dans lequel chaque unité radio comprend une première interface de réseau raccordée au premier réseau de communication sans fil et une deuxième interface optique raccordée au deuxième réseau de communication optique.

7. Le premier poste de base tel que revendiqué à la revendication 5, dans lequel l'unité distribuée est configurée en outre pour recevoir un ou plusieurs paquets de transmission à un premier équipement d'utilisateur, et adjoindre un entête spécial à un ou à plusieurs paquets, dans lequel l'entête spécial indique une unité radio associée au premier équipement d'utilisateur.

8. Le premier poste de base tel que revendiqué à la revendication 5, dans lequel désactiver la pluralité d'unités radio comprend désactiver la première interface associée au premier réseau de communication sans fil de chaque unité radio.

9. Un support de mémoire non transitoire pour effectuer un transfert d'un ou de plusieurs équipements (125) d'utilisateurs à un véhicule (115), le support de mémoire non transitoire comprenant une ou plusieurs instructions, qui, lorsqu'elles sont exécutées sur un ou plusieurs processeurs, font que le un ou les plusieurs processeurs :
a. déterminent une information d'emplacement d'une première unité (110) radio à bord du véhicule (115), le un ou les plusieurs équipements d'utilisateurs étant raccordés à la première unité (110) radio ;
b. déterminent une distance à un premier poste de véhicule où le véhicule a un arrêt sur la base de l'information d'emplacement de la première unité (110) radio à bord du véhicule (115) ;
c. effectuent un transfert forcé d'un ou de plusieurs équipements (125) d'utilisateurs raccordés à l'unité (110) radio du premier poste de base à un deuxième poste (185) de base sur la base de la distance déterminée, dans lequel le deuxième poste (185) de base est à proximité du premier poste de véhicule ; et
d. à la suite du transfert forcé, désactivent la pluralité d'unités radio à bord du véhicule (115) pendant un premier laps de temps.
